# FASCICULE DE BREVET EUROPEEN

(11) **EP 0 739 767 B1**
(45) Date de publication et mention de la délivrance du brevet: **23.02.2000**
(21) Numéro de dépôt: 96400862.7
(22) Date de dépôt: 23.04.1996
(51) Int. Cl.: B60G 17/04, B60G 17/056

(54) **Dispositif de commande de hauteur automatique et manuelle pour un essieu de véhicule automobile à suspension hydropneumatique ou analogue**
Automatische und manuelle Niveauregelungsvorrichtung für eine Kraftfahrzeugsachse mit hydropneumatischer Aufhängung oder ähnliches
Automatic and manual level control device for a motor vehicle axle with hydropneumatic suspension or analog

(30) Priorité: 27.04.1995 FR 9505085
(43) Date de publication de la demande: 30.10.1996
(73) Titulaire: AUTOMOBILES PEUGEOT, 75116 Paris (FR); AUTOMOBILES CITROEN, 92200 Neuilly-sur-Seine (FR)
(72) Inventeur: Lamorlette, Bruno, 78800 Houilles (FR)
(74) Mandataire: Berger, Helmut

(56) Documents cités:
- EP-A- 0 256 897
- EP-A- 0 311 465
- EP-A- 0 611 671

## Description

La présente invention concerne un dispositif de commande de hauteur automatique et manuelle pour un essieu de véhicule automobile à suspension hydropneumatique ou analogue.

On connaît des dispositifs pour commander automatiquement et manuellement la hauteur des essieux d'un véhicule automobile comprenant, pour chaque essieu, un correcteur de hauteur hydraulique à tiroir, un moyen de détection de la hauteur de l'essieu agissant sur le tiroir par l'intermédiaire d'un moyen élastique et constituant la commande automatique et un levier de manoeuvre agissant sur le tiroir par l'intermédiaire d'un autre moyen élastique, ce levier constituant la commande manuelle (voir par exemple les documents EP-A-0311465 et EP-A-0256897).

La commande automatique et la commande manuelle de ce dispositif connu agissant sur le tiroir par l'intermédiaire des moyens élastiques précités, les positions imposées par la commande manuelle sont obtenues par équilibre des forces exercées par les ressorts.

Ce dispositif connu présente l'inconvénient que la commande est imprécise car il est difficile de maîtriser la raideur des ressorts à la fabrication.

L'invention a pour but d'éliminer l'inconvénient ci-dessus des dispositifs connus en proposant un dispositif de commande de hauteur automatique et manuelle pour un essieu de véhicule automobile à suspension hydropneumatique ou analogue, comprenant un correcteur de hauteur hydraulique à tiroir, un moyen de détection de la hauteur de l'essieu agissant sur le tiroir par l'intermédiaire d'un moyen élastique, ce moyen de détection constituant la commande automatique précitée, et un levier de manoeuvre agissant sur le tiroir par l'intermédiaire d'un moyen élastique, ce levier constituant la commande manuelle précitée, et qui est caractérisé en ce que la commande automatique et la commande manuelle agissent sur un mécanisme de leviers commun lui-même agissant sur le tiroir par l'intermédiaire d'un moyen élastique commun.

De préférence, le mécanisme de leviers comprend un palonnier articulé sur le levier de commande manuelle et sur un élément lié à la barre anti-dévers du véhicule constituant le moyen de détection de la hauteur de l'essieu, et un levier relié au palonnier par une biellette et agissant sur le tiroir du correcteur par l'intermédiaire du moyen élastique commun précité.

Le moyen élastique précité comprend un ressort hélicoïdal à branches croisées précontraint de telle façon que ses branches tendent à se rapprocher l'une de l'autre et monté sur le levier précité de commande du tiroir pivotant autour d'un axe sensiblement coaxial à l'axe de la partie hélicoïdale du ressort, les extrémités des branches du ressort étant en appui d'une part sur des rebords prévus sur ce levier et d'autre part sur des rebords prévus sur une pièce solidaire du tiroir.

L'invention sera mieux comprise et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels:

La figure 1 représente de façon schématique un ensemble de suspension hydropneumatique et barre anti-dévers d'un essieu de véhicule automobile auquel s'applique le dispositif de commande de hauteur automatique et manuelle de l'invention.

La figure 2 représente le dispositif de commande de hauteur automatique et manuelle conforme à l'invention.

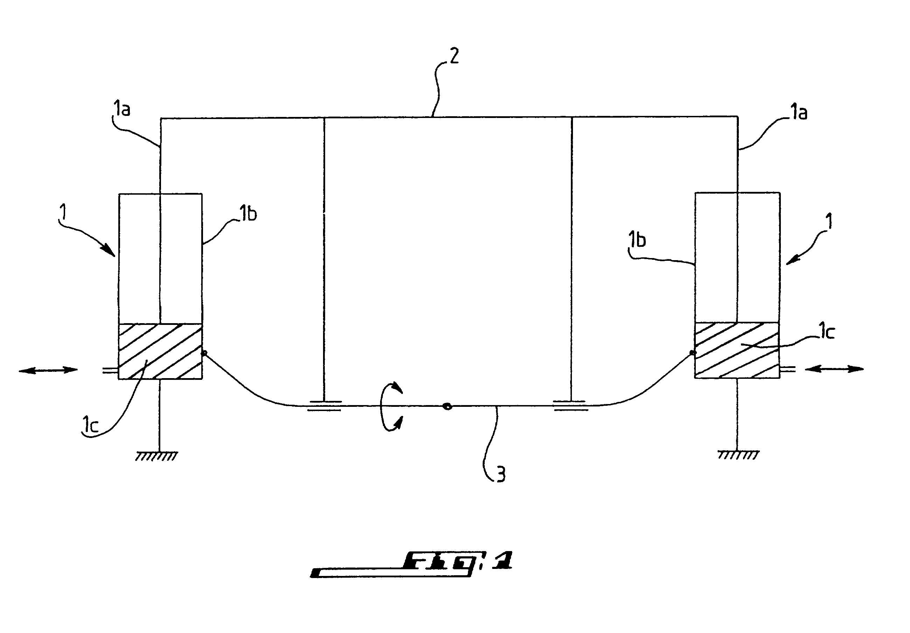

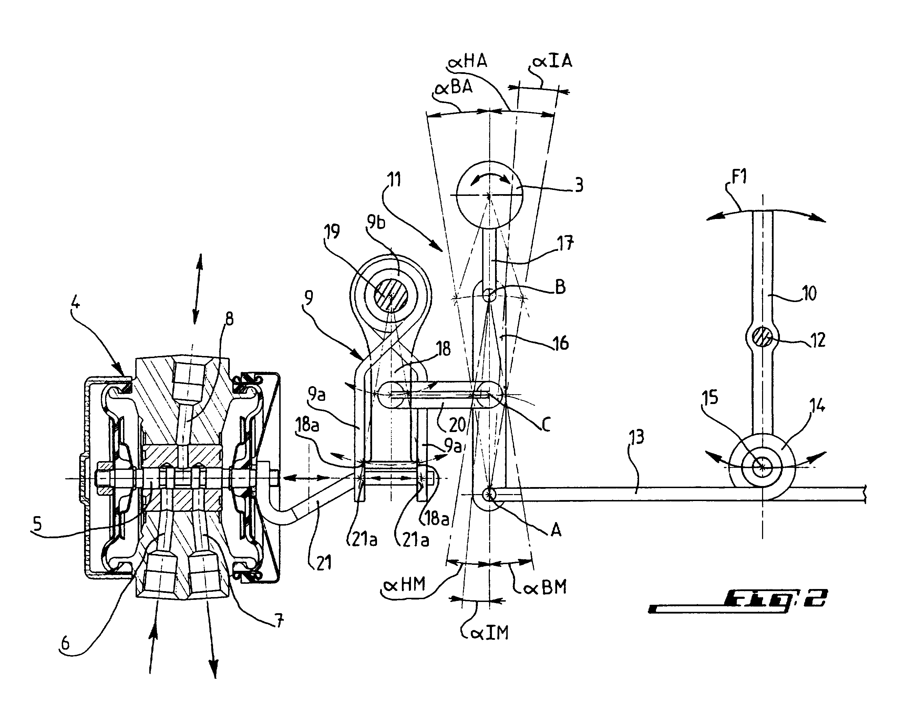

En se reportant aux figures 1 et 2, les références 1 désignent deux éléments de suspension hydropneumatique, par exemple avant, d'un véhicule automobile et constitués dans le cas présent par deux vérins, dont les tiges la sont solidaires de la caisse 2 du véhicule et les cylindres 1b sont solidaires respectivement des deux extrémités d'une barre anti-dévers 3 constituant un moyen de détection de la hauteur du véhicule dans le dispositif de commande de hauteur automatique et manuelle pour un essieu de ce véhicule et qui va être décrit ci-après.

Ce dispositif comprend un correcteur hydraulique 4 de hauteur du véhicule, monté sur l'essieu avant (non représenté) du véhicule et comprenant un tiroir 5 à déplacement commandé de façon à occuper respectivement deux positions d'ouverture à l'admission et à l'échappement du circuit de suspension et une position de fermeture de ce circuit. Ce circuit de suspension comprend deux conduits internes 6, 7 du correcteur 4 raccordés respectivement à la sortie haute pression d'une pompe (non représentée) et au bac de retour de fluide hydraulique et un troisième conduit interne 8 du correcteur 4 raccordé aux chambres de travail lc des vérins de suspension 1.

Le dispositif de commande comprend de plus le moyen de détection de la hauteur de l'essieu constitué par la barre anti-dévers 3 et agissant sur le tiroir 5 par l'intermédiaire d'un moyen élastique 9, la barre anti-dévers 3 constituant la commande automatique de hauteur de l'essieu.

Le dispositif de commande comprend également un levier de commande manuelle ou levier de manoeuvre 10 agissant sur le tiroir 5 par l'intermédiaire d'un mécanisme 11. Le levier 10 est monté pivotant autour d'un axe fixe 12 perpendiculaire à une tringle 13 reliant le levier 10 au mécanisme 11. Comme cela est connu, le levier 10 comporte une poignée (non représentée) montée coulissante autour de la partie supérieure du levier 10 de façon qu'après soulèvement de cette poignée, la course angulaire du levier 10 engendre un déplacement longitudinal correspondant de la tringle 13 qui sera déterminé en fonction de crans sélectionnés au nombre de quatre et qui correspondent respectivement à une position basse, à une position de référence, à une position intermédiaire et à une position haute du véhicule. Le levier 10 est fixé de manière articulée à la tringle 13 par l'intermédiaire d'une boucle 14 de la tringle 13 montée sur un axe 15 solidaire de l'extrémité inférieure du levier 10 perpendiculairement à celui-ci.

Selon l'invention, la commande automatique et la commande manuelle du dispositif agissent sur le mécanisme commun 11 lui-même agissant sur le tiroir 5 du correcteur 4 par l'intermédiaire du moyen élastique commun 9.

Le mécanisme 11 comprend un palonnier 16 ayant son extrémité inférieure reliée de manière articulée au point A à la tringle 13 et son extrémité supérieure reliée de manière articulée au point B à une pièce 17 solidaire de la barre anti-dévers 3 perpendiculairement à celle-ci. Le mécanisme 11 comprend de plus un levier 18 monté pivotant autour d'un axe 19 sensiblement perpendiculaire au plan contenant le palonnier 16 et relié de manière articulée, au point C, au palonnier 16 par l'intermédiaire d'une biellette 20.

Le moyen élastique 9 comprend un ressort hélicoïdal à branches croisées 9a et précontraint de telle façon que les branches 9a tendent à se rapprocher l'une de l'autre. Le ressort 9 est monté par sa partie hélicoïdale 9b sur l'axe de pivotement 19 du levier 18 et les extrémités des branches 9a du ressort 9 sont en appui d'une part sur des rebords 18a prévus sur l'extrémité inférieure du levier 18 et d'autre part sur des rebords 21a d'une pièce 21 solidaire du tiroir 5 du correcteur 4.

Le fonctionnement automatique du dispositif va être maintenant décrit.

Lorsque le véhicule est à sa hauteur de référence, le mécanisme 11 positionne le tiroir 5 du correcteur 4 à la position centrale représentée en figure 2 et correspondant à la fermeture du circuit de suspension. Lors d'une modification de charge du véhicule, la hauteur de celui-ci s'écarte de la hauteur de référence. Il en résulte alors un mouvement de la barre anti-dévers 3 qui entraîne, par l'intermédiaire de la pièce 17, la rotation du point d'articulation B autour du point d'articulation A qui est fixe puisque la commande manuelle n'est pas sollicitée. Le pivotement autour du point A du palonnier 16 déplace dans le sens correspondant le point d'articulation C de manière à faire pivoter le levier 18 autour de l'axe 19. Le pivotement du levier 18 entraîne un mouvement de rotation correspondant de l'une des branches 9a du ressort 9 avec déplacement dans le même sens de l'autre 9a des branches du ressort puisque ces deux branches 9a ont tendance à se rapprocher l'une de l'autre. L'autre branche 9a déplace le tiroir 5 par l'intermédiaire de la pièce 21 pour ouvrir le circuit de suspension de façon que le véhicule reprenne sa hauteur de référence, ce qui permet à la barre anti-dévers 3 de ramener, par l'intermédiaire du mécanisme 11, le tiroir 5 en position fermée.

Le fonctionnement manuel du dispositif pour modifier manuellement la hauteur du véhicule s'effectue en deux temps pratiquement simultanés.

Dans un premier temps, le levier de commande manuelle 10 est déplacé dans un sens ou dans l'autre comme indiqué par la double flèche F1 sur la figure 2 pour déplacer d'une valeur d'angle αBM ou αHM, suivant que l'on souhaite amener le véhicule respectivement à partir de la hauteur de référence, en position basse ou en position haute, le palonnier 16 autour du point d'articulation B qui est fixe puisque la barre anti-dévers 3 ne bouge pas. Le pivotement du palonnier 16 autour du point fixe d'articulation B provoque le pivotement dans le sens correspondant du levier 18 qui déplace, par l'intermédiaire du ressort 9 et de la pièce 21, le tiroir 5 du correcteur 4 à une position d'admission ou de retrait de fluide hydraulique respectivement dans les chambres de travail 1c des éléments de suspension 1 ou de ces chambres de travail. Dans un deuxième temps, le point d'articulation A devient fixe à sa nouvelle position et du fait d'avoir déplacé le tiroir 5, il se produit une admission ou un retrait du fluide hydraulique dans ou des éléments de suspension 1, ce qui fait tourner la barre anti-dévers 3 qui fait pivoter le point d'articulation B autour du point fixe d'articulation A d'un angle αBA ou αHA pour ramener le point d'articulation C à sa position initiale correspondant à la position de fermeture du circuit de suspension par le tiroir 5 du correcteur 4. L'angle αBA ou l'angle αHA doit être inférieur ou égal à l'angle de pivotement précédent αBM ou αHM pour ne pas faire revenir le tiroir 5 au-delà de sa position d'équilibre. Pour le réglage manuel de la hauteur du véhicule à une valeur intermédiaire représentée en figure 2 par l'angle αIM, il faut que cet angle soit égal à l'angle αIA de rotation du palonnier sous l'effet de la rotation de la barre anti-dévers.

Le dispositif de commande automatique et manuelle de la hauteur d'un véhicule automobile ci-dessus décrit est plus précis que ceux connus jusqu'à maintenant et en tout cas élimine le problème de maîtrise de la raideur des ressorts à la fabrication que posaient les dispositifs connus. Le dispositif de l'invention permet donc de conserver les mêmes fonctions que celles des dispositifs connus en pilotant manuellement celui-ci non plus par équilibre d'effort, mais par équilibre de courses en remplaçant le ressort de commande manuelle par un palonnier.

## Revendications

1. Dispositif de commande de hauteur automatique et manuelle pour un essieu de véhicule automobile à suspension hydropneumatique ou analogue, comprenant un correcteur (4) de hauteur hydraulique à tiroir (5), un moyen (3) de détection de la hauteur de l'essieu agissant sur le tiroir (5) par l'intermédiaire d'un moyen élastique, ce moyen de détection (3) constituant la commande automatique précitée, et un levier de manoeuvre (10) agissant sur le tiroir (5) par l'intermédiaire d'un moyen élastique, ce levier (10) constituant la commande manuelle précitée, caractérisé en ce que la commande automatique et la commande manuelle agissent directement sur un mécanisme de leviers commun (11) lui-même agissant sur le tiroir (5) par l'intermédiaire d'un moyen élastique commun (9).

2. Dispositif selon la revendication 1, du type où le moyen de détection de la hauteur du véhicule est une barre anti-dévers (3), caractérisé en ce que le mécanisme de leviers (11) comprend un palonnier (16) articulé sur le levier de commande manuelle (10) et sur un élément (17) lié à la barre anti-dévers (3), et un levier (18) relié au palonnier (16) par une biellette (20) et agissant sur le tiroir (5) du correcteur (4) par l'intermédiaire du moyen élastique commun (9) précité.

3. Dispositif selon la revendication 2, caractérisé en ce que le moyen élastique précité comprend un ressort hélicoïdal (9) à branches croisées (9a) précontraint de telle façon que ses branches (9a) tendent à se rapprocher l'une de l'autre et monté sur le levier (18) précité de commande du tiroir (5) pivotant autour d'un axe (19) sensiblement coaxial à l'axe de la partie hélicoïdale (9b) du ressort (9), les extrémités des branches (9a) du ressort (9) étant en appui d'une part sur des rebords (18a) prévus sur le levier (18) et d'autre part sur des rebords (21a) prévus sur une pièce (21) solidaire du tiroir (5).

## Patentansprüche

1. Verfahren zur Steuerung der automatischen und manuellen Höhe für eine Fahrzeugachse mit hydropneumatischer oder analoger Aufhängung, umfassend einen Regler (4) der hydraulischen Höhe mit Schub (5), ein Detektionsmittel (3) für die Achshöhe, das mittels eines elastischen Mittels auf den Schub (5) wirkt, wobei dieses Detektionsmittel (3) die vorgenannte automatische Steuerung bildet, und einen Schaltknüppel (10), der mittels eines elastischen Mittels auf den Schub (5) wirkt, wobei dieser Knüppel (10) die vorgenannte manuelle Steuerung bildet, dadurch gekennzeichnet, daß die automatische Steuerung und die manuelle Steuerung direkt auf einen gemeinsamen Schaltmechanismus (11) wirken, der seinerseits mittels eines gemeinsamen elastischen Mittels (9) auf den Schub (5) wirkt.

2. Vorrichtung gemäß Anspruch 1, der Art, in der das Detektionsmittel für die Höhe des Fahrzeugs eine Stange zur Verhinderung von Achsstürzen (3) ist, dadurch gekennzeichnet, daß der Hebemechanismus (11) einen Steuerknüppel (16) umfaßt, der auf dem manuellen Steuerknüppel (10) und einem mit der Stange zur Verhinderung von Achsstürzen (3) verbundenen Element (17) artikuliert ist, das mit der Stange zur Verhinderung von Achsstürzen (3) verbunden ist, und einen Knüppel (18), der mit dem Steuerknüppel (16) durch eine Pleuelstange (20) verbunden ist und auf den Schub (5) des Reglers (4) mittels eines gemeinsamen vorgenannten elastischen Mittels (9) einwirkt.

3. Vorrichtung gemäß Anspruch 2, dadurch gekennzeichnet, daß das vorgenannte elastische Mittel eine spiralförmige Feder (9) mit mechanisch vorgespanntem Griffpaar (9a) derart umfaßt, daß sein Griffpaar (9a) dazu neigt, sich jeweils einander anzunähern und auf dem vorgenannten Knüppel (18) zum Steuern des Schubes (5) aufgebracht, der um eine deutlich zur Achse des spiralförmigen Teils (9b) der Feder (9) der koaxialen Achse (19) schwenkt, wobei die äußeren Enden des Griffpaares (9a) der Feder (9) einerseits auf den auf dem Knüppel (18) vorgesehenen Anschlägen (18a) anliegen und andererseits auf den Anschlägen (21a), die auf einem mit dem Schub (5) festverbundenen Teil (21) vorgesehen sind.

## Claims

1. Automatic and manual level control device for a motor vehicle axle with hydropneumatic suspension or analog, comprising a hydraulic height compensator (4) with a slide member (5), a means (3) for detecting the height of the axle acting on the slide member (5) through a resilient means, this detecting means (3) constituting said automatic control, and a handling lever (10) acting upon the slide member (5) through a resilient means, this lever (10) constituting said manual control, characterized in that the automatic control and the manual control act directly upon a common lever mechanism (11) acting itself upon the slide member (5) through a common resilient means (9).

2. Device according to claim 1, of the type in which the means for detecting the vehicle height is an anti-slanting bar (3), characterized in that the lever mechanism (11) comprises a rocking lever (16) articulated upon the manual control lever (10) and upon a member (17) connected to the anti-slanting bar (3), and a lever (18) connected to the rocking lever (16) by means of a connecting rod (20) and acting upon the slide member (5) of the compensator (4) through said common resilient means (9).

3. Device according to claim 2, characterized in that said resilient means comprises a helical spring (9) with crossed arms (9a) that is prestressed so that its arms (9a) will tend to come closer together and mounted on said lever (18) controlling the slide member (5) pivoting around a pin (19) that is substantially coaxial to axis of the helical part (9b) of the spring (9), ends of the arms (9a) of the spring (9) bearing, on the one hand, upon edges (18a) provided on the lever (18) and, on the other hand, upon edges (21a) provided on a part (21) forming one piece with the slide member (5).
